# EUROPEAN PATENT SPECIFICATION

(11) **EP 2 872 770 B1**
(45) Date of publication and mention of the grant of the patent: **28.09.2016**
(21) Application number: 13745444.3
(22) Date of filing: 26.06.2013
(51) Int. Cl.: F02M 55/00, F02M 55/02

(54) **PIPE CONNECTOR AND FUEL INJECTION SYSTEM**
ROHRVERBINDER UND KRAFTSTOFFEINSPRITZSYSTEM
DISPOSITIF DE RACCORDEMENT DE TUYAU ET SYSTÈME D'INJECTION DE CARBURANT

(30) Priority: 29.06.2012 FI 20125753
(43) Date of publication of application: 20.05.2015
(73) Proprietor: Wärtsilä Finland Oy, 65380 Vaasa (FI)
(72) Inventor: WINTERSTELLER, Anton, I-34018 San Dorligo della Valle (Trieste) (IT); SCIUTO, Giacomo, I-34018 San Dorligo della Valle (Trieste) (IT); EKLUND, Kjell, FI-VAASA 65370 (FI); ZUANIGH, Luca, I-34018 San Dorligo della Valle (Trieste) (IT); VOUTILAINEN, Vesa, FI-65100 Vaasa (FI)
(74) Representative: Berggren Oy Ab
(86) International application number: PCT/FI2013/050699
(87) International publication number: WO 2014/001637

(56) References cited:
- EP-A1- 1 469 188
- WO-A2-2012/107634

## Description

The invention relates to a pipe connector for interconnecting a first double wall pipe, a second pipe and a third pipe. The invention also relates to a fuel injection system.

Document WO2012/107634 discloses a pipe connector comprising a connector body, a first, second and third fitting.

It is commonly known to arrange fuel pipes of a diesel engine inside another pipe in order to keep possible leakage inside the outer pipe. In case of leak, the leaking fuel may be carried along inside the outer pipe away from the vicinity of the engine. In order to detect the leak in this kinds of a solution e.g. different kinds of plugs has been used. Thus the leak may have been detected by unplugging the plug. Another used manner has been to utilise disengageable hoses, and by disconnecting such, leak may also have been detected. This known method is, however, very unsophisticated, because the locating of leak by this method is very slow and also troublesome.

Document EP 1469 188 A shows a double walled fuel lines connecting fuel injectors in a common rail system.

An object of the present invention is to provide a new pipe connector for connecting double wall pipes. A further object of the invention is to provide a fuel injection system with an improved fuel leak detection system.

The objects are achieved as disclosed in claims 1 and 6.

A pipe connector according to the invention comprises a connector body, a first fitting connectable to a first double wall pipe, the first fitting comprising a first portion connectable to the inner flow space and a second portion connectable to the outer flow space of the first double wall pipe, a second fitting connectable to the inner flow space of a second double wall pipe, a third fitting comprising a first portion and a second portion, which first portion is connectable to the third pipe, and a flow channel arranged in the connector body for interconnecting the first portion of the first fitting, the second fitting and the first portion of the third fitting. The pipe connector comprises a leak channel arranged in flow connection with the second portion of the first fitting, a leakage outlet for discharging fluid from the leak channel, a discharge channel extending from the second portion of the third fitting to the leakage outlet and providing a continuous flow connection therebetween, and a closure member having a first position, in which fluid flow from the leak channel to the leakage outlet is prevented, and a second position, in which fluid flow from the leak channel to the leakage outlet is allowed. The closure member is arranged to move from the first position to the second position when fluid pressure in the leak channel rises above a certain limit. The pipe connector further comprises blocking means for preventing flow of fluid from the outer flow space of the second double wall pipe from passing through the pipe connector, and a branching point for dividing the flow channel into three branch channels, wherein a first branch channel extends from the branching point to the first fitting, a second branch channel extends from the branching point to the second fitting and a third branch channel extends from the branching point to the third fitting. The third branch channel is provided with throttling, through which fluid is arranged to flow to the third fitting.

The throttling in the third channel dampens pressure pulsation caused by a high pressure pump, which is connected to the pipe connector for supplying fluid to pipe connector. The throttling thus helps to avoid interferences between a system feeding fluid to the pipe connector and a system delivering the fluid further.

In the following the invention will be described by way of an example with reference to the accompanying drawings, in which:
Figure 1 is a cross sectional view of a pipe connector according to an embodiment of the present invention, and
Figure 2 shows schematically a fuel injection system according to an embodiment of the present invention.

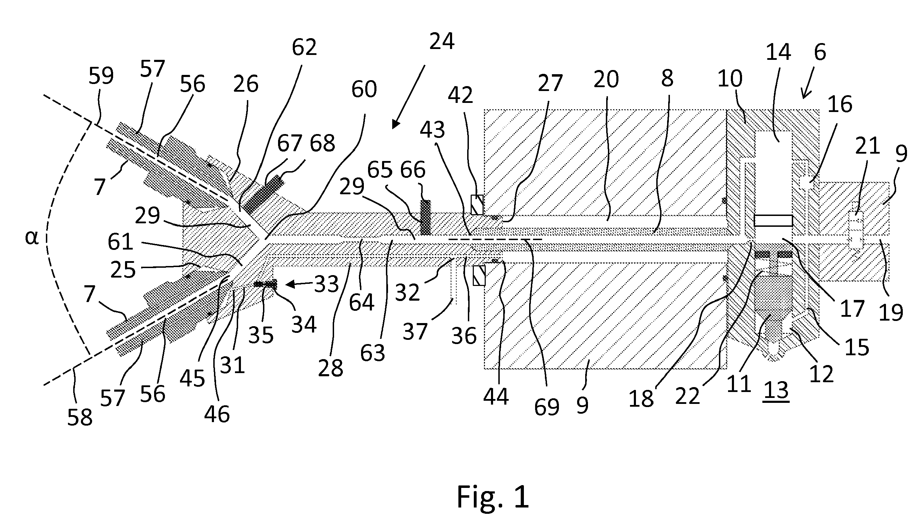

Fig. 1 shows a pipe connector 24 for fluidly interconnecting a first double wall pipe, a second double wall pipe and a third pipe. The double wall pipe comprises an inner flow space for fluid, such as fuel, and an outer flow space for fluid leaking from the inner flow space. The pipe connector 24 is arranged to interconnect an inner flow space of the first double wall pipe, an inner flow space of the second double wall pipe and the third pipe.

The pipe connector 24 comprises three fittings 25, 26, 27. A first fitting 25 is connectable to the first double wall pipe. The first fitting 25 comprises a first portion 45 connectable to the inner flow space 56 and a second portion 46 connectable to the outer flow space 57 of the first double wall pipe. A second fitting 26 is connectable to the inner flow space of the second double wall pipe. A third fitting 27 comprises a first portion 43 and a second portion 44. The first portion 43 is connectable to the third pipe. The third pipe can be a double wall pipe, which comprises an inner flow space for fluid and an outer flow space for possibly leaking fluid. In that case, the first portion 43 of the third fitting is connectable to the inner flow space and the second portion 44 of the third fitting 27 is connectable to the outer flow space of the third pipe.

The pipe connector 24 comprises a connector body 28, in which a flow channel 29 is arranged for fluidly interconnecting the first portion 45 of the first fitting 25, the second fitting 26 and the first portion 43 of the third fitting. A leak channel 31 is arranged in the connector body 28 in flow connection with the second portion 46 of the first fitting 25. The pipe connector 24 comprises a leakage outlet 32 for discharging fluid from the leak channel 31. The pipe connector 24 comprises a discharge channel 36, which extends from the second portion 44 of the third fitting 27 to the leakage outlet 32 and provides a continuous flow connection therebetween. The discharge channel 36 is arranged in the connector body 28. The pipe connector 24 comprises blocking means for preventing the flow of fluid from the outer flow space of the second double wall pipe from passing through the pipe connector 24. The blocking means are arranged to continuously prevent the flow of fluid from the outer flow space of the second double wall pipe from passing through the pipe connector 24. The connector body 28 can act as such blocking means. The outer flow space of the second double wall pipe connectable to the second fitting 26 is fluidly separated from the leakage outlet 32 and the leak channel 31.

The central axis 58 of the first fitting 25 is arranged at an angle (α) of 20°-120° relative to the central axis 59 of the second fitting 26. With this angle range, better access to the pipes that are connected to the pipe connector 24 can be provided. Also the strength of the pipe connector 24 is increased. The central axis 58 of the first fitting 25 and the central axis 59 of the second fitting 26 can be arranged at an acute angle, typically at an angle of 40º-60º in relation to each other.

The central axis 69 of the third fitting 27 is at an angle of 120-170º in relation to the central axis 58 of the first fitting and the central axis 59 of the second fitting.

The flow channel 29 comprises a branching point 60 which divides the flow channel 29 into the three branch channels 61, 62, 63. The first branch channel 61 extends from the branching point 60 to the first fitting 25. The second branch channel 62 extends from the branching point 60 to the second fitting 26 and the third branch channel 63 extends from the branching point 60 to the third fitting 27.

The third branch channel 63 is provided with throttling 64 through which fuel is arranged to flow to the third fitting 27. The throttling is an orifice 64 having a smaller diameter than the third branch channel 63. The effective cross-sectional flow area of the orifice 64 is 40-60 % of the effective cross-sectional flow area of the third branch channel 63. Within this range, sufficient pressure drop can be achieved and cavitation can be avoided.

The pipe connector 29 is provided with receiving means 65 for receiving a pressure sensor 66 that is arranged to measure fluid pressure in the third branch channel 63 between the orifice 64 and the third fitting 27. The receiving means 65 are provided with a pressure sensor 66. The pipe connector 29 is also provided with a further receiving means 67 for receiving a further pressure sensor 68 that is arranged to measure fluid pressure in the first branch channel 61 or the second branch channel 62. The further receiving means 67 are provided with a further pressure sensor 68. For example, an opening in the connector body 28 can act as receiving means 65 and further receiving means 67.

The pipe connector 24 is provided with a leak detector 33 for detecting fluid, such as fuel, flowing into the leak channel 31. The leak detector 33 comprises a closure member, such as a pin 34, which extends into the leak channel 31. The pin 34 has a first position, in which fluid flow from the leak channel 31 to the leakage outlet 32 is prevented, and a second position, in which fluid flow from the leak channel 31 to the leakage outlet 32 is allowed. The closure member 34 is arranged to move from the first position to the second position when fluid pressure in the leak channel 31 rises above a certain limit. In the first position the pin 34 blocks the leak channel 31 and thus prevents fuel flow from the leak channel 31 to the leakage outlet 32. In the second position the pin 34 uncovers the leak channel 31 so that a flow connection exists between the leak channel 31 and the leakage outlet 32.

The pin 34 is provided with a holding member for keeping the pin 34 in the first position when the pressure in the leak channel 31 is low. The holding member comprises rings 35 made of rubber or other suitable material and arranged around the outer surface of the pin 34. The rings 35 are against the inner surface of the leak channel 31. The pressure, at which the pin 34 begins to move from the first position towards the second position, can be set by proper design of the rings 35. In the second position the pin 34 protrudes from the connector body 28. Thus, the second position of the pin 34 can be detected from outside the connector 24. Since the leak channel 31 is in flow connection with only one fitting, the protruding pin 34 shows the double wall supply pipe, in which the leak occurs.

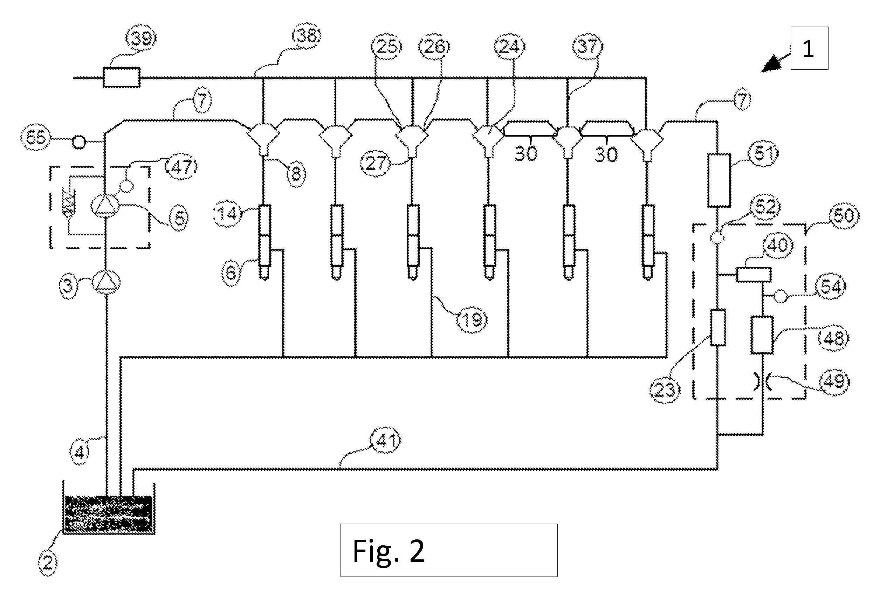

Figure 2 shows schematically a fuel injection system 1 of a large reciprocating engine, for example of a large diesel engine. Cylinders of the engine can be arranged inline or in V configuration. Large reciprocating engine refers here to such engines that can be used for instance as main and auxiliary engines in ships or at power plants for production of heat and/or electricity. The engine can be operated by heavy fuel oil. The fuel injection system 1 comprises fuel injectors 6 for injecting fuel into the cylinders of the engine. Additionally, the fuel injection system comprises a fuel source, for example a fuel tank 2, from which fuel is fed by means of a low pressure 3 pump along a fuel line 4 into a high pressure pump 5. The high pressure pump 5 elevates the fuel pressure to a level at which a sufficient injection pressure may be obtained in the injectors 6. If the cylinders are arranged in a V-configuration, the fuel injection system 1 can comprise a common high pressure pump for both cylinder banks or each cylinder bank can be provided with a separate high pressure pump. The high pressure pump 5 is provided with a temperature sensor 47 for measuring fuel temperature.

The fuel injection system 1 comprises 1 a double wall supply pipe 7 for feeding fuel from the high pressure pump 5 toward the fuel injectors 6. One end of the double wall supply pipe 7 is connected to the high pressure pump 5. The double wall supply pipe 7 comprises an inner flow space 56 for feeding fuel toward the injectors 6 and an outer flow space 57 for possibly leaking fuel (shown in fig. 1). Fuel is fed from the high pressure pump 5 toward the injectors 6 through the inner flow space 56. The outer flow space acts as a collecting channel for possibly leaking fuel. Each injector 6 is connected to the double wall supply pipe 7 by means of a separate feed pipe 8. First end of the feed pipe 8 is connected to the injector 6. Second end of the feed pipe 8 is connected to the double wall supply pipe 7 by means of the pipe connector 24 shown in figure 1. The supply pipe 7 can be provided with a pressure sensor 55, which is arranged to measure the fuel pressure in the inner flow space 56. The pressure sensor 55 can be installed between the high pressure pump 5 and the first pipe connector 24 that is located downstream of the high pressure pump 5.

The first fitting 25 and the second fitting 26 of the pipe connector 24 are connected to the double wall supply pipe 7. The first portion 45 of the first fitting 25 and the second fitting 26 are connected to the inner flow space 56 of the double wall supply pipe 7. The second portion 46 of the first fitting 25 is connected to the outer flow space 57 of the double wall supply pipe 7. The first portion 43 of the third fitting 27 is connected to the feed pipe 8. The outer flow space of the double wall supply pipe 7 connected to the second fitting 26 is fluidly separated from the leak channel 31 and the outer flow space of the supply pipe 7 connected to the first fitting 26. Thus, the pipe connectors 24 divide the outer flow space of the double wall supply pipe 7 into compartments 30, which are fluidly separated from each other. The outer flow space of the supply pipe 7 connected to the second fitting 26 is fluidly separated from the leak channel 31 and the leakage outlet 32.

The double wall supply pipe 7 is provided with a circulation valve 23 for connecting the supply pipe 7 to the fuel tank 2. The circulation valve 23 enables the circulation of fuel in the injection system 1, for example for heating it before starting of the engine. Further, the double wall supply pipe 7 is provided with a safety valve 40, which protects the fuel injection system 1 against excess pressure. The safety valve 40 maintains the pressure in the supply pipe 7 below a predetermined maximum value. The safety valve 40 can also act as a pressure drop valve, by which the fuel injection system 1 can be depressurized. The outlet side of the safety valve 40 is provided with a discharge container 48 and a throttle 49, through which fuel discharged from the safety valve 40 flows. The throttle 49 is placed downstream of the container 48. The discharge container 48 and the throttle 49 dampen the pressure pulsation of fuel. Further, the outlet side of the safety valve 40 is provided with a fuel temperature sensor 54 for measuring the fuel temperature so as to reveal possible fuel leaks from the safety valve 40. The circulation valve 23 and the safety valve 40 are connected to the fuel tank 2 through a return line 41. The circulation valve 23 and the safety valve 40 can be integrated into a single valve module 50. Additionally, the valve module 50 comprises the discharge container 48 and the throttle 49. The valve module 50 can also comprise the fuel temperature sensor 54. The circulation valve 23 and the safety valve 40 are connected to the double wall supply pipe 7 at a location downstream of the last pipe connector 25. A high pressure volume 51 can be connected to inner flow space of the double wall supply pipe 7. The purpose of the high pressure volume 51 is to dampen fuel pressure pulsations in the inner flow space. The high pressure volume 51 can be connected to the double wall supply pipe at a location downstream of the last pipe connector 24. The valve module 50 can be provided with a pressure sensor 52, which is arranged to measure fuel pressure in the inner flow space of the double wall supply pipe 7. The pressure measurements of pressure sensor 55 and the fuel pressure sensor 52 are used in the control of the fuel pressure in the inner flow space. The fuel pressure in the inner flow space can be controlled on the basis of the higher pressure measured by the sensors 52, 55.

The fuel injection system 1 is provided without a pressure accumulator (common rail), from which fuel is fed into the feed pipes 8. A conventional common rail fuel injection system comprises a pressure accumulator into which fuel is fed from the high pressure pump and from which fuel is further fed into one or more injectors by feed pipes. The injection system shown in fig. 1 does not comprise such a pressure accumulator i.e. a pressure accumulator to which one or more feed pipes 8 are connected. It is commonly known in the field of fuel injection that the pressure accumulator has to store a considerable volume of pressurized fuel i.e. fuel is accumulated in the pressure accumulator. Depending on the shape of the pressure accumulator, the cross sectional flow area of the pressure accumulator is typically considerably greater than that of fuel discharge pipes connected thereto. In the embodiment shown in the drawings, the cross sectional flow area of the supply pipe 7 (inner flow space) is as great as or slightly greater than the cross sectional flow area of the feed pipes 8 connected thereto.

The basic construction of the fuel injector 6 is shown in more detail in figure 1. The fuel injectors 6 are mounted in the cylinder head 9 of the engine. The cylinder head 9 comprises a bore 20 in which the feed pipe 8 is arranged. The fuel injector 6 comprises an injector body 10, in which a fuel chamber 12 and a valve needle 11 are arranged. The valve needle 11 controls fuel injection from a fuel chamber 12 into the engine cylinder 13. Depending on the position of the valve needle 11, the fuel injection from the fuel chamber 12 into the cylinder 13 is either allowed or prevented. The injector 6 comprises a pressure accumulator 14 for fuel. The pressure accumulator 14 is an integral part of the injector 6. The pressure accumulator 14 can be arranged in the injector body 10. The volume of the pressure accumulator 14 is at least 40, typically 50 to 70 times the amount (volume) of fuel injected by the injector 6 during one injection event at full (100 %) engine load.

The pressure accumulator 14 is in flow connection with the fuel chamber 12 via a connecting channel 15. A flow fuse 16 is arranged in the connecting channel 15. The flow fuse 16 prevents the fuel flow from the injector pressure accumulator 14 to the fuel chamber 12 in case of malfunction of the injector 6, for example when the valve needle 11 fails to close properly.

The injector 6 comprises a control chamber 17 into which fuel is fed through the feed pipe 8. An inlet of the control chamber 17 is provided with a throttle 18 by which the fuel flow into the control chamber 17 can be restricted. The fuel pressure in the control chamber 17 acts on the valve needle 11. The force caused by the fuel pressure in the control chamber 17 urges the valve needle 11 toward the closed position. The movement of the valve needle 11 and thus the fuel injection into the cylinder 13 can be controlled by adjusting fuel pressure in the control chamber 17. A return line 19 for discharging fuel from the control chamber 17 is connected to the injector 6. The return line 19 is arranged in or connected to a second bore 53 in the cylinder head 9. A control valve 21 is arranged in the return pipe 19 for controlling the discharge of fuel from the control chamber 17. The control valve 21 can be a solenoid valve. The injector 6 is also provided with a spring 22 which urges the valve needle 11 toward the closed position.

To initiate the fuel injection the control valve 21 is opened. Fuel flows from the control chamber 17 into the return line 19 and the fuel pressure in the control chamber 17 decreases. Fuel flows through the second bore 53 and the return line 21 into the fuel tank 2. When the pressure in the control chamber 17 is low enough, the force caused by the fuel pressure in the fuel chamber 17 urges the valve needle 11 toward the open position against the force of spring 22. As a result, the valve needle 11 is lifted from its seat and fuel is injected from the fuel chamber 12 into the cylinder 13. When the control valve 21 is closed, fuel pressure in the control chamber 17 increases. Consequently, the valve needle 11 returns to its closed position against the seat so that fuel injection from the fuel chamber 12 into cylinder 13 stops.

The feed pipe 8 is arranged in the bore 20 in the cylinder head 9. The pipe connector 24 is connected to the cylinder head 9 so that the bore 20 opening surrounds the third fitting 27 and the discharge channel opening. The pipe connector 24 comprises a mounting bracket 42, by which it can be attached to the cylinder head 9. A clearance between the outer surface of the feed pipe 8 and the inner surface of the bore 20 acts as a drain channel for fuel leaking from the injector 6. The bore 20 is in flow connection with the leakage outlet 32 through the discharge channel 36. Thus, fuel leaking from the injector 6 can be drained through the leakage outlet 32.

Figure 1 shows a normal situation in which there is no leak and the pin 34 is in the first position in the connector body 28. If leaking fuel flows to the leak channel 31, the pressure in the leak channel 31 begins to rise. As the pressure in the leak channel 31 rises above a certain level, the pin 34 begins to move outwards from the connector body 28, until the second position is reached. In the second position fuel flows from the leak channel 31 to the leakage outlet 32. Since the leak channel 31 is in flow connection with only one compartment 30, the protruding pin 31 also indicates the supply pipe section in which the leak occurs. The flow of fuel from the outer flow space 57 of double wall supply pipe, which is connected to the second fitting 26, through the pipe connector 24 is prevented. Thus, fuel from the outer flow space 57 of each compartment 30 can be discharged through only one pipe connector 24.

A discharge line 37 is connected to the leakage outlet 32. The discharge lines 37 from the pipe connectors 24 are connected to a common collecting line 38. Flow of leaking fuel from the discharge lines 37 is led to the collecting line 38. The collecting line 38 is provided with a leak detection device 39. The leak detection device 39 is connected to the collecting line 38 to a location through which all fuel from the discharge lines 37 flows. Because in normal operating conditions of the injectors 6 a small amount of fuel leaks from the injectors 6, it is favorable that only larger flows of leaking fuel are detected. Therefore, the leak detection device 39 is arranged to detect only fuel flows having a flow rate over a predetermined value. When the predetermined flow rate is exceeded, the leak detection device 39 is arranged to trigger an alarm or otherwise indicate that there is a fuel leak from the injector 6 or the double wall supply pipe 7. If the leak detection device indicates a leak and all the pins 34 are in the position, fuel leaks from the injector 6 and/or feed pipe 8. Correspondingly, if at least one of the pins 34 is in the second position, fuel leaks from the double wall supply pipe 7. The pin 34 also indicates the supply pipe section, in which the leak occurs.

The throttling 64 in the pipe connector 24 dampens fuel pressure pulsation caused by the high pressure pump 5. The pressure sensor 66 and the further pressure sensor 68 monitor the fuel pressure in the pipe connector 24 on both sides of the throttling 64. The pressure values of the pressure sensor 66 and the further pressure sensor 68 can utilized in the control of the injection system 1.

## Claims

1. A pipe connector (24) for interconnecting an inner flow space of a first double wall pipe, an inner flow space of a second double wall pipe and a third pipe, which pipe connector (24) comprises:
- a connector body (28),
- a first fitting (25) connectable to the first double wall pipe, the first fitting (25) comprising a first portion (45) connectable to the inner flow space and a second portion (46) connectable to the outer flow space of the first double wall pipe,
- a second fitting (26) connectable to the inner flow space of the second double wall pipe,
- a third fitting (27) comprising a first portion (43) and a second portion (44), which first portion (43) is connectable to the third pipe,
- a flow channel (29) arranged in the connector body (28) for interconnecting the first portion (45) of the first fitting, the second fitting (26) and the first portion (43) of the third fitting (27),
- a leak channel (31) arranged in flow connection with the second portion (46) of the first fitting (25),
- a leakage outlet (32) for discharging fluid from the leak channel (31),
- a discharge channel (36) extending from the second portion (44) of the third fitting (27) to the leakage outlet (32) and providing a continuous flow connection therebetween,
- a closure member (34) having a first position, in which flow of fluid from the leak channel (31) to the leakage outlet (32) is prevented, and a second position, in which flow of fluid from the leak channel (31) to the leakage outlet (32) is allowed, which closure member (34) is arranged to move from the first position to the second position when fluid pressure in the leak channel (31) rises above a certain limit,
- blocking means for preventing flow of fluid from the outer flow space of the second double wall pipe from passing through the pipe connector (24), and
- a branching point (60) for dividing the flow channel (29) into three branch channels (61, 62, 63), wherein a first branch channel (61) extends from the branching point (60) to the first fitting (25), a second branch channel (62) extends from the branching point (60) to the second fitting (26) and a third branch channel (63) extends from the branching point (60) to the third fitting (27),
**characterised in that** the third branch channel (63) is provided with throttling means (64), through which fluid is arranged to flow to the third fitting (27).

2. The pipe connector (24) according to claim 1, **characterised in that** the throttling is an orifice (64), of which effective cross-sectional flow area is 40-60 % of the effective cross-sectional flow area of the third branch channel (63).

3. The pipe connector (24) according to claim 1 or 2, **characterised in that** the pipe connector (24) is provided with receiving means (65) for receiving a pressure sensor (66) that is arranged to measure fluid pressure in the third branch channel (63) between the throttling (64) and the third fitting (27).

4. The pipe connector (24) according to any of claims 1-3, **characterised in that** the pipe connector (24) is provided with a further receiving means (67) for receiving a further pressure sensor (68) that is arranged to measure fluid pressure in the first branch channel (61) or the second branch channel (62).

5. The pipe connector (24) according to claim 1, **characterised in that** a central axis (58) of the first fitting (25) is arranged at an angle (α) 20º-120º relative to the central axis (59) of the second fitting (26).

6. A fuel injection system (1) for a reciprocating engine, comprising:
- injectors (6) for injecting pressurized fuel into the cylinders (13) of the engine,
- a high pressure pump (5) for pressurizing fuel to be injected,
- a double wall supply pipe (7) comprising an inner flow space (56) for feeding fuel from the high pressure pump (5) toward the injectors (6) and an outer flow space (57) for possibly leaking fuel, and
- feed pipes (8) for feeding fuel from the double wall supply pipe (7) to the injectors (6),
**characterised in that** the double wall supply pipe (7) is connected to the feed pipes (8) by means of pipe connectors (24) according to any of claims 1-5, and that the first fittings (25) and the second fittings (26) of the pipe connectors (24) are connected to the double wall supply pipe (7) and the third fittings (27) to the feed pipes (8).

7. The fuel injection system (1) according to claim 6, **characterised in that** discharge lines (37) are connected to the leakage outlets (32), and a collecting line (38) is arranged in flow connection with the discharge lines (37).

8. The fuel injection system according to claim 7, **characterised in that** the collecting line (38) is provided with a leak detection device (39).

9. The fuel injection system according to claim 6, **characterised in that** each injector (6) is provided with a pressure accumulator (14) for storing fuel before injection.

10. The fuel injection system according to claim 9, **characterised in that** a volume of the pressure accumulator (14) is at least 40 times the amount of fuel injected by the injector (6) during one injection event at full (100 %) engine load.

## Patentansprüche

1. Rohrverbinder (24) zum Verbinden eines inneren Stromraums eines ersten doppelwandigen Rohrs, eines inneren Stromraums eines zweiten doppelwandigen Rohrs und eines dritten Rohrs miteinander, wobei der Rohrverbinder (24) folgendes umfasst:
- einen Verbinderkörper (28),
- eine erste Armatur (25), die mit dem ersten doppelwandigen Rohr verbindbar ist, wobei die erste Armatur (25) einen ersten Abschnitt (45), der mit dem inneren Stromraum verbindbar ist, und einen zweiten Abschnitt (46) umfasst, der mit dem äußeren Stromraum des ersten doppelwandigen Rohrs verbindbar ist,
- eine zweite Armatur (26), die mit dem inneren Stromraum des zweiten doppelwandigen Rohrs verbindbar ist,
- eine dritte Armatur (27), die einen ersten Abschnitt (43) und einen zweiten Abschnitt (44) umfasst, wobei der erste Abschnitt (43) mit dem dritten Rohr verbindbar ist,
- einen Stromkanal (29), der zum Verbinden des ersten Abschnitts (45) der ersten Armatur, der zweiten Armatur (26) und des ersten Abschnitts (43) der dritten Armatur (27) miteinander im Verbinderkörper (28) angeordnet ist,
- einen Leckkanal (31), der in Stromverbindung mit dem zweiten Abschnitt (46) der ersten Armatur (25) angeordnet ist,
- einen Leckauslass (32) zum Ablassen von Fluid aus dem Leckkanal (31),
- einen Ablasskanal (36), der vom zweiten Abschnitt (44) der dritten Armatur (27) zum Leckauslass (32) verläuft und eine fortlaufende Stromverbindung dazwischen vorsieht,
- ein Verschlussglied (34) mit einer ersten Position, in der Fluidstrom vom Leckkanal (31) zum Leckauslass (32) verhindert ist, und einer zweiten Position, in der Fluidstrom vom Leckkanal (31) zum Leckauslass (32) ermöglicht ist, wobei das Verschlussglied (34) dazu angeordnet ist, sich aus der ersten Position zur zweiten Position zu bewegen, wenn Fluiddruck im Leckkanal (31) über eine bestimmte Grenze ansteigt,
- Sperrmittel zum Verhindern, dass Fluidstrom vom äußeren Stromraum des zweiten doppelwandigen Rohrs den Rohrverbinder (24) durchläuft, und
- einen Verzweigungspunkt (60) zum Aufteilen des Stromkanals (29) in drei Zweigkanäle (61, 62, 63), wobei ein erster Zweigkanal (61) vom Verzweigungspunkt (60) zur ersten Armatur (25) verläuft, ein zweiter Zweigkanal (62) vom Verzweigungspunkt (60) zur zweiten Armatur (26) verläuft und ein dritter Zweigkanal (63) vom Verzweigungspunkt (60) zur dritten Armatur (27) verläuft,
**dadurch gekennzeichnet, dass** der dritte Zweigkanal (63) mit Drosselmitteln (64) versehen ist, durch die Fluid zur dritten Armatur (27) strömen soll.

2. Rohrverbinder (24) nach Anspruch 1, **dadurch gekennzeichnet, dass** die Drosselung eine Öffnung (64) ist, deren effektiver Durchflussquerschnitt 40 - 60 % des effektiven Durchflussquerschnitts des dritten Zweigkanals (63) beträgt.

3. Rohrverbinder (24) nach einem der Ansprüche 1 oder 2, **dadurch gekennzeichnet, dass** der Rohrverbinder (24) mit Aufnahmemitteln (65) zum Aufnehmen eines Drucksensors (66) versehen ist, der zum Messen von Fluiddruck im dritten Zweigkanal (63) zwischen der Drosselung (64) und der dritten Armatur (27) angeordnet ist.

4. Rohrverbinder (24) nach einem der Ansprüche 1 - 3, **dadurch gekennzeichnet, dass** der Rohrverbinder (24) mit einem weiteren Aufnahmemittel (67) zum Aufnehmen eines weiteren Drucksensors (68) versehen ist, der zum Messen von Fluiddruck im ersten Zweigkanal (61) oder im zweiten Zweigkanal (62) angeordnet ist.

5. Rohrverbinder (24) nach Anspruch 1, **dadurch gekennzeichnet, dass** eine Mittelachse (58) der ersten Armatur (25) in einem Winkel (α) von 20º - 120º bezüglich der Mittelachse (59) der zweiten Armatur (26) angeordnet ist.

6. Kraftstoffeinspritzsystem (1) für einen Kolbenmotor, umfassend:
- Einspritzer (6) zum Einspritzen von druckbeaufschlagtem Kraftstoff in die Zylinder (13) des Motors,
- eine Hochdruckpumpe (5) zum Druckbeaufschlagen des Fluids, das eingespritzt werden soll,
- ein doppelwandiges Versorgungsrohr (7), das einen inneren Stromraum (56) zum Zuführen von Kraftstoff von der Hochdruckpumpe (5) zu den Einspritzern (6) hin und einen äußeren Stromraum (57) für möglicherweise ausleckenden Kraftstoff umfasst, und
- Zufuhrrohre (8) zum Zuführen von Kraftstoff vom doppelwandigen Versorgungsrohr (7) zu den Einspritzern (6),
**dadurch gekennzeichnet, dass** das doppelwandige Versorgungsrohr (7) mithilfe von Rohrverbindern (24) gemäß einem der Ansprüche 1 - 5 mit den Zufuhrrohren (8) verbunden ist, und dass die ersten Armaturen (25) und die zweiten Armaturen (26) der Rohrverbinder (24) mit dem doppelwandigen Versorgungsrohr (7) und die dritten Armaturen (27) mit den Zufuhrrohren (8) verbunden sind.

7. Kraftstoffeinspritzsystem (1) nach Anspruch 6, **dadurch gekennzeichnet, dass** Ablassleitungen (37) mit den Leckauslässen (32) verbunden sind und eine Sammelleitung (38) in Stromverbindung mit den Ablassleitungen (37) angeordnet ist.

8. Kraftstoffeinspritzsystem (1) nach Anspruch 7, **dadurch gekennzeichnet, dass** die Sammelleitung (38) mit einer Leckerkennungsvorrichtung (39) versehen ist.

9. Kraftstoffeinspritzsystem (1) nach Anspruch 6, **dadurch gekennzeichnet, dass** jeder Einspritzer (6) mit einem Druckspeicher (14) zum Speichern von Kraftstoff vor dem Einspritzen versehen ist.

10. Kraftstoffeinspritzsystem (1) nach Anspruch 9, **dadurch gekennzeichnet, dass** ein Volumen des Druckspeichers (14) zumindest das 40-fache der Menge von Kraftstoff ist, die durch den Einspritzer (6) während eines Einspritzereignisses auf voller (100 %-er) Motorlast eingespritzt wird.

## Revendications

1. Connecteur de tuyau (24) pour l'interconnexion d'un espace d'écoulement interne d'un premier tuyau à double paroi, d'un espace d'écoulement interne d'un deuxième tuyau à double paroi et d'un troisième tuyau, lequel connecteur de tuyau (24) comprend:
- un corps de connecteur (28),
- un premier raccord (25) connectable au premier tuyau à double paroi, le premier raccord (25) comprenant une première section (45) connectable à l'espace d'écoulement interne et une seconde section (46) connectable à l'espace d'écoulement externe du premier tuyau à double paroi,
- un deuxième raccord (26) connectable à l'espace d'écoulement interne du deuxième tuyau à double paroi,
- un troisième raccord (27) comprenant une première section (43) et une seconde section (44), laquelle première section (43) est connectable au troisième tuyau,
- un canal d'écoulement (29) disposé dans le corps de connecteur (28) pour interconnecter la première section (45) du premier raccord, le deuxième raccord (26) et la première section (43) du troisième raccord (27),
- un canal de fuite (31) disposé en connexion d'écoulement avec la seconde section (46) du premier raccord (25),
- une sortie de fuite (32) pour décharger du fluide depuis le canal de fuite (31),
- un canal de décharge (36) s'étendant de la seconde section (44) du troisième raccord (27) à la sortie de fuite (32) et établissant une connexion d'écoulement continu entre celles-ci,
- un élément de fermeture (34) ayant une première position dans laquelle l'écoulement de fluide du canal de fluide (31) vers la sortie de fuite (32) est empêché et une seconde position dans laquelle l'écoulement de fluide du canal de fuite (31) vers la sortie de fuite (32) est permis, lequel élément de fermeture (34) est conçu pour se déplacer de la première position à la seconde position lorsque la pression de fluide dans le canal de fuite (31) augmente au-delà d'une certaine limite,
- un moyen de blocage pour empêcher l'écoulement de fluide depuis l'espace d'écoulement externe du deuxième tuyau à double paroi de passer à travers le connecteur de tuyau (24), et
- un point de branchement (60) pour diviser le canal d'écoulement (29) en trois canaux ramifiés (61, 62, 63), un premier canal ramifié (61) s'étendant du point de branchement (60) au premier raccord (25), un deuxième canal ramifié (62) s'étendant du point de branchement (60) au deuxième raccord (26) et un troisième canal ramifié (63) s'étendant du point de branchement (60) au troisième raccord (27),
**caractérisé en ce que** le troisième canal ramifié (63) est pourvu d'un moyen d'étranglement (64) à travers lequel du fluide est amené à s'écouler vers le troisième raccord (27).

2. Connecteur de tuyau (24) selon la revendication 1, **caractérisé en ce que** l'étranglement est un orifice (64) dont la zone d'écoulement de section transversale effective représente 40 - 60 % de la zone d'écoulement de section transversale effective du troisième canal ramifié (63).

3. Connecteur de tuyau (24) selon la revendication 1 ou 2, **caractérisé en ce que** le connecteur de tuyau (24) est pourvu d'un moyen récepteur (65) pour recevoir un capteur de pression (66) qui est conçu pour mesurer la pression de fluide dans le troisième canal ramifié (63) entre l'étranglement (64) et le troisième raccord (27).

4. Connecteur de tuyau (24) selon l'une quelconque des revendications 1 - 3, **caractérisé en ce que** le connecteur de tuyau (24) est pourvu d'un autre moyen récepteur (67) pour recevoir un autre capteur de pression (68) qui est conçu pour mesurer la pression de fluide dans le premier canal ramifié (61) ou le deuxième canal ramifié (62).

5. Connecteur de tuyau (24) selon la revendication 1, **caractérisé en ce qu'**un axe central (58) du premier raccord (25) est disposé suivant un angle (α) de 20° - 120° par rapport à l'axe central (59) du deuxième raccord (26).

6. Système d'injection de carburant (1) pour moteur alternatif, comprenant:
- des injecteurs (6) pour injecter du carburant pressurisé dans les cylindres (13) du moteur,
- une pompe à haute pression (5) pour pressuriser le fluide à injecter,
- un tuyau d'alimentation à double paroi (7) comprenant un espace d'écoulement interne (56) pour alimenter la pompe à haute pression en carburant (5) en direction des injecteurs (6) et un espace d'écoulement externe (57) pour le carburant fuyant éventuellement, et
- des tuyaux d'alimentation (8) pour apporter du carburant depuis le tuyau à double paroi (7) vers les injecteurs (6),
**caractérisé en ce que** le tuyau d'alimentation à double paroi (7) est connecté aux tuyaux d'alimentation (8) au moyen de connecteurs de tuyau (24) selon l'une quelconque des revendications 1 - 5, et que les premiers raccords (25) et les deuxièmes raccords (26) des connecteurs de tuyaux (24) sont connectés au tuyau d'alimentation à double paroi (7) et les troisièmes raccords (27) aux tuyaux d'alimentation (8).

7. Système d'injection de carburant (1) selon la revendication 6, **caractérisé en ce que** des lignes de décharge (37) sont connectées à la sortie de fuite (32), et qu'une ligne de collecte (38) est disposée en connexion d'écoulement avec les lignes de décharge (37).

8. Système d'injection de carburant selon la revendication 7, **caractérisé en ce que** la ligne de collecte (38) est pourvue d'un dispositif de détection de fuite (39).

9. Système d'injection de carburant selon la revendication 6, **caractérisé en ce que** chaque injecteur (6) est pourvu d'un accumulateur de pression (14) pour stocker du carburant avant injection.

10. Système d'injection de carburant selon la revendication 9, **caractérisé en ce qu'**un volume de l'accumulateur de pression (14) représente au moins 40 fois la quantité de carburant injecté par les injecteurs (6) pendant une occurrence d'injection à pleine (100 %) charge du moteur.
